# EUROPEAN PATENT SPECIFICATION

(11) **EP 0 332 594 B1**
(45) Date of publication and mention of the grant of the patent: **29.12.1993**
(21) Application number: 89850032.7
(22) Date of filing: 03.02.1989
(51) Int. Cl.: D21G 1/02, F16C 13/00

(54) **Variable-crown roll**
Walze mit anpassbarer Biegelinie
Rouleau à réglage de la flexion

(30) Priority: 05.02.1988 FI 880515
(43) Date of publication of application: 13.09.1989
(73) Proprietor: VALMET PAPER MACHINERY INC., 00130 Helsinki (FI)
(72) Inventor: Niskanen, Juhani, SF-90460 Oulunsalo (FI)
(74) Representative: Rostovanyi, Peter

(56) References cited:
- EP-A- 0 221 448
- DE-A- 2 655 894
- DE-A- 3 734 832
- GB-A- 2 049 516
- GB-A- 2 105 497
- US-A- 3 494 675
- US-A- 3 587 152

## Description

The invention concerns a variable-crown roll, which comprises a massive central axle and a roll mantle, which is arranged as revolving on said axle, hydraulic loading elements or a corresponding pressure chamber or a series thereof being fitted in the space between said central axle and said roll mantle, by means of which said elements or chamber/chambers it is possible to adjust the profile of the nip formed with the counter-roll of said variable-crown roll, and which said loading elements or equivalent are fitted substantially at the nip plane of said nip, and which said roll mantle is journalled as revolving substantially within or near the areas of both of its ends on the central axle by means of bearings, which are fitted on annular parts, hydraulic power units being fitted between said annular parts and the central axle, which said power units can be loaded by the pressure of a hydraulic fluid so as, at least partly, to produce the forces that load the nip and by means of which said power units the roll mantle of the variable-crown roll can be displaced relative the central axle so as to open/close the nip.

In paper machines, such rolls are commonly used as form a dewatering press nip, a smoothing nip, or a calendering nip with a counter-roll. In these purposes of use it is important that the distribution of the linear load, i.e. the profile of the nip in the axial direction of the rolls can be made constant or that this profile can be adjusted as desired, e.g. so as to control the transverse moisture profile and/or thickness profile (caliper) of the web. For this purpose, various variable-crown or adjustable-crown rolls are known in prior art (in the following, the designation variable-crown roll will be used for both of them), attempts being made to act upon the distribution of the linear load in a nip by means of said rolls.

In prior art, several different variable-crown rolls for paper machines are known. As a rule, these rolls comprise a massive or tubular stationary roll axle and a roll mantle arranged as revolving around said axle. Between said axle and the mantle, acting upon the inner face of the mantle, glide-shoe arrangements and/or a pressure-fluid chamber or a series of chambers are fitted so that the axial profile of the mantle at the nip can be aligned or adjusted as desired. As a rule, the nips formed by such rolls, such as press nips or calendering nips, are loaded by means of load forces applied to the axle journals of the variable-crown roll and of its counter-roll.

The variable-crown rolls may be so-called rolls with loading arms, wherein the roll mantle is, as a rule, at its ends journalled on the axle so that the ends of the roll mantle cannot move in the radial direction relative the axle, or they may be so-called variable-crown rolls with no loading arms, wherein the stroke length of the piston-cylinder elements of the hydraulic loading elements has been arranged large enough so that it is also sufficient for producing the opening movement and the closing movement, respectively, of the nip, even so that loading arms acting upon the ends of the roll axle and provided with power units are not needed at all. In such variable-crown rolls with no loading arms, the hydraulic loading elements, which act upon the inner face of the roll mantle, also produce the nip pressure loading proper, in addition to the crown variation and nip profilation. Drawbacks of the prior-art variable-crown rolls with no loading arms are complicated construction and difficulties in making the stroke length of the piston-cylinder elements between the stationary central axle and the roll mantle sufficiently long and in producing sufficiently high loading and crown-variation forces by means of the piston-cylinder elements. In particular the end regions of the roll mantle have proved particularly problematic in this respect.

In respect of the prior art most closely related to the present invention, reference is made to the Finnish Patent No. 57,004 (corresponds to US Patent No. 3,885,283), to the Finnish Patent No. 67,923 (corresponds to German Published Pat. Appl. 3,003,396), and to the cancelled Finnish Patent Application 791581 (corresponds to British Published Pat. Appl. 2,022,775). In the above FI Patent 57,004 a variable-crown roll is described wherein the stroke length of the hydraulic cylinder-piston glide-shoe elements is dimensioned large enough so that it is sufficient for carrying out the pressing and lifting movements of the mantle of the variable-crown roll and in which said roll the ends of the cylindrical mantle of the roll are provided with guides that guide the mantle in the direction of the nip plane so that no other devices are needed to open/close the press loading and the nip.

From said FI Patent 67,923, a variable-crown roll is previously known wherein power units are placed outside the bearings of the roll mantle between the central axle and the ends of the roll mantle, and by means of which said power units forces can be applied to the roll mantle by whose means the loading profile of the roll mantle can be aligned.

Of the publications mentioned above, the variable-crown roll described in said FI Pat. Appl. 791581 is perhaps most closely related to the present invention, in which said roll, facing the bearings of the roll mantle and placed inside their stationary inner rings, there are pistons fitted in cylinder bores in the central axle, by means of which said pistons the roll mantle can be raised so as to open the nip. Said piston-cylinder devices are provided for the purpose of opening the nip alone, and by their means it is not possible to produce forces that load the nip.

The object of the present invention is to avoid the drawbacks that have come out above.

An object of the present invention is to provide a variable-crown roll which can also be used as a so-called variable-crown roll with no loading arms, i.e. as a roll in which the movement of opening of the nip formed by the roll (as a rule of an order of 30 to 100 mm) away from the counter-roll as well as the closing of the nip and the loading of its end zones can be produced by means of hydraulic glide shoe/piston-cylinder elements fitted inside the mantle of the variable-crown roll and inside extensions of said mantle, if any.

A further object of the present invention is to provide a variable-crown roll in which, inside the roll mantle or inside extensions provided at the ends of the mantle, between the central axle and the roll mantle, facing the bearings, such power units are advantageously fitted by means of which the nip can be both opened and closed as well as, moreover, by means of which loading forces can be directed at the ends of the roll mantle optimally and in such a way that the entire adjusting capacity of the hydraulic glide elements placed within the journalling interspace of the roll mantle remains available for the compensation for local profile faults.

In view of achieving the objectives stated above and those that will come out in the following, the invention is mainly characterized in that the hydraulic power units comprise at least two hydraulic-cylinder-piston devices, the directions of effect of the forces produced by means of said devices diverging from the direction of the nip plane and said devices being arranged so that the resultant of said forces is parallel to the nip plane, and that said annular part is supported as slidingly displaceable relative the central axle in the direction of the nip plane.

In the invention, inside the end zones of the revolving mantle of the variable-crown roll and/or inside particular extension sleeves, on the end part of the central axle, an annular part is provided around which the bearing between the central axle and the roll mantle is fitted. Between the annular part and the end part of the central axle, hydraulic power units are provided, which can be loaded by means of certain pressures of hydraulic fluid for partial generation of the forces that load the nip, and, moreover, by means of said power units, the mantle of the variable-crown roll can be displaced relative its central axle so as to open/close said nip. In the solution in accordance with the invention, the power units are arranged in such a way that, by means of the arrangement of the invention, as compared with the prior-art solutions, a higher force is produced at lower pressure levels. In the power units, it is favourably possible to use the same pressure level as is used elsewhere in the hydraulic system of the roll. Moreover, in the invention, the service life of the bearing can be made longer, because the pressure distribution in the bearing is more advantageous than in the prior-art solutions.

In the following, the invention will be described in detail with reference to an exemplifying embodiment of the invention, illustrated in the figures in the accompanying drawing, the invention being by no means strictly confined to the details of said embodiment.

Figure 1 is a schematical vertical sectional view of a variable-crown roll in accordance with the invention at the level of an end bearing of the roll.

Figure 2 is a partial sectional view of a roll as shown in Fig. 1 and of a counter-roll placed in nip contact with said roll, taken along the line II-II in Fig. 1.

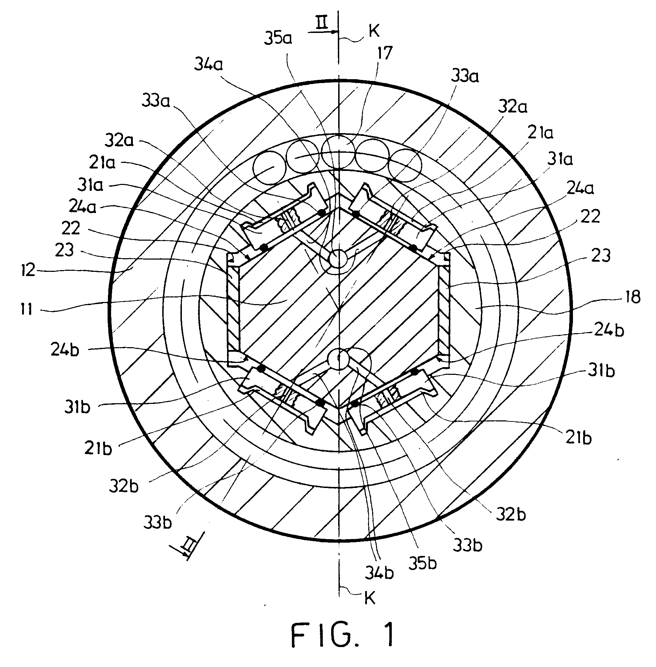

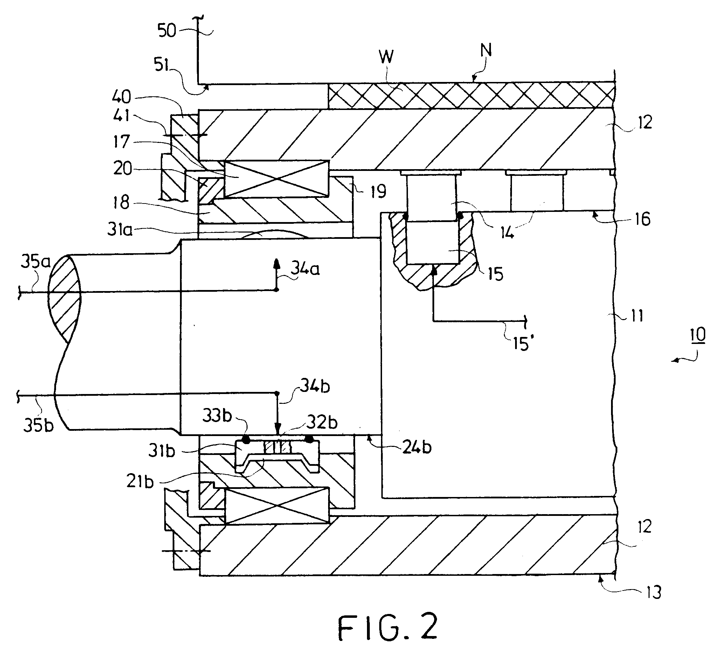

Referring to Figures 1 and 2, the variable-crown roll shown in them is denoted generally with the reference numeral 10. In the ordinary way, the variable-crown roll 10 comprises a stationary central axle 11, on which the roll mantle 12 is arranged revolving. Between the roll mantle 12 and the central axle 11, hydraulic loading elements 14 are provided, which comprise hydraulic pistons fitted displaceably in cylinder bores 15 formed into the central axle 11, glide shoes placed at the upper ends of said pistons being supported against the inner face 16 of the roll mantle 12. The hydraulic loading elements 14 are loaded by means of a pressure medium, e.g. pressure fluid, against the inner face 16 of the roll mantle, which said pressure fluid is fed into the cylinder bores 15 in the hydraulic loading elements 14 to underneath the hydraulic pistons along fluid ducts 15′. Thus, by means of the hydraulic loading elements 14, the profile of the nip N that can be formed by said variable-crown roll 10 with the counter-roll 50 is adjusted, for said hydraulic loading elements 14 are fitted to act substantially at the nip plane K-K of the nip N. For example, a paper web W or equivalent is arranged in the customary way to run through the nip N defined by the outer face of the roll mantle 12 of the variable-crown roll 10 and by the face 51 of the counter-roll 50. End parts 40 are attached to the ends of the roll mantle 12 of the variable-crown roll 10, e.g., by means of screws 41.

The roll mantle 12 of the variable-crown roll 10 is mounted rotatably substantially in the area of or at the proximity of both of its ends by means of bearings 17 on said stationary axle 11, and said axle 11 is supported on the frame of the device that includes the variable-crown roll 10 in accordance with the invention from outside the journalling points of the roll mantle 12. From outside, the bearings 17 are supported on a bearing face formed on the inner face 16 of the roll mantle, and the stationary inner part of the bearings consists of an annular part 18, along whose outer face the rolling members of the bearings 17 roll. The rolling members of the bearings 17 are placed on the annular part 18 in a groove, which are defined in the axial direction by rigidifiers 19 and 20, of which, in the embodiment of Fig. 2, the inner rigidifier 19 in the axial direction, i.e. the first rigidifier, is stationary, whereas the outer rigidifier 20 in the axial direction, i.e. the second rigidifier, is preferably detachable, being appropriately attached to the annular part 18 by means of a screw attachment. Of course, the arrangement may also be reversed, in relation to that described above.

The annular part 18 is supported on the axle 11 of the variable-crown roll in accordance with the invention by means of power units by means of which the nip N can be both opened and closed and by means of which, moreover, loading forces can be applied to the ends of the roll mantle 12 optimally and in such a way that the entire regulating capacity of the hydraulic loading elements 14 placed within the journalling interspace of the roll mantle 12 remains available for compensation of local profile faults. Said power units comprise cylinder bores 21a,21b formed into the annular part 18, in which said cylinder bores hydraulic pistons 31a,31b are fitted displaceably, said hydraulic pistons being supported on the central axle 11 of the variable-crown roll. Thus, the power units 21a, 31a;21b,31b are placed below the bearing 17, and, as is shown in the figure, they are arranged so that their direction of effect diverges from the direction of the nip plane K-K. As can be seen in particular from Fig. 1, the power units are arranged in pairs and symmetrically relative the nip plane K-K, so that the straight lines of effect of the power units in each pair form an angle relative the nip plane K-K, whereby the resultant of the forces in the pair of power units 21a,31a and 21b,31b, respectively, runs in the nip plane K-K. In the figures it is shown additionally that, facing the bearing 17, two sets of power units are placed, of which one set, the pair of power units 21b,31b, acts in the direction of the nip N, i.e. by means of which the nip N can be closed, and of which the other set, the pair of power units 21a,31a, acts in the opposite direction. The power units acting in the other direction are not needed if they are never used in practice. In the present-day supercalenders this is the case. On the contrary, power units acting in both directions can be used for profilation in all objects of use, including supercalenders, if the desired change is very large in the opposite direction.

Since the pistons 31a,31b of the power units do not act directly in the nip plane K-K, but their lines of effect form an angle with the nip plane, the pistons 31a,31b must also be able to move in the direction of the "circumference" relative the axle 11. For this purpose, plane faces 24a,24b have been formed on the axle 11 facing the pistons 31a,31b, the direction of the planes of said faces being perpendicular to the line of effect of the piston concerned. Each piston 31a,31b is sealed relative said plane face 24a,24b by means of seals 33a,33b provided on the pistons, which said seals permit movements of the pistons along said plane face. The hydraulic power units are loaded by means of hydraulic fluid, for which axial fluid ducts 35a,35b have been formed into the axle 11, as well as radial fluid ducts 34a,34b communicating with the axial ducts and opening to underneath the pistons 31a,31b onto the plane faces 24a,24b into the spaces defined by the seals 33a,33b. On the other hand, into the pistons 31a,31b, ducts 32a,32b have been formed that extend through the pistons and that, thus, pass to the opposite side of each piston into the space between the piston 31a,31b and the bottom of the cylinder bore 21a,21b. Thus, the pistons 31a,31b are hydraulically relieved, for the same pressure is effective both between the piston 31a,31b and the plane face 24a,24b in the space defined by the seal 33a,33b and at the opposite side of the piston in the pressure space between the piston 31a,31b and the bottom of the cylinder bore 21a,21b. Thus, the roll mantle 12 of the variable-crown roll in accordance with the invention can be made to move, by means of the power units placed underneath the bearing 17, relative the axle 11 without friction.

In order to ensure that the direction of the movement of the roll mantle 12 relative the axle 11 is parallel to the nip plane K-K, on the roll axle 11, at both sides of the nip plane K-K, glide faces 23 are provided, which are parallel to the nip plane K-K. The glide faces 23 may be made, e.g., of a suitable bearing material, and they are, thus, fixed on the roll axle 11. In a corresponding way, guide faces 22 have been formed on the annular part 18, along which said guide faces 22 the glide faces 23 are fitted to glide when the position of the roll mantle 12 in relation to the axle 11 is changed. Thus, said faces 22 and 23 guide the annular part 18 and the axle 11 in relation to each other.

By means of the solution in accordance with the invention, the highly significant advantage is obtained that, by means of power units placed underneath the bearing 17, a sufficiently high force is produced by means of a low pressure level. Thus, in a preferred embodiment, in the power units 21a,21b;31a,31b, the same pressure level can be used as elsewhere in the roll. Moreover, in the solution in accordance with the invention, the service life of the bearing 17 becomes substantially better than in earlier solutions, for the distribution of pressure in the bearing 17 becomes more advantageous, because the power units 21a, 21b;31a,31b produce a power effect in the bearing which acts upon the bearing in the direction of the circumference over a longer distance than if the power units were fitted to act directly in the nip plane K-K.

Above, the invention has been described by way of example with reference to the figures in the accompanying drawing. The invention is, however, not confined to the exemplifying embodiment illustrated in the figures alone, but different details of the invention may show variation within the scope of the inventive idea defined in the accompanying patent claims.

## Claims

1. Variable-crown roll, which comprises a massive central axle (11) and a roll mantle (12), which is arranged as revolving on said axle, hydraulic loading elements (14) or a corresponding pressure chamber or a series thereof being fitted in the space between said central axle (11) and said roll mantle (12), by means of which said elements (14) or chamber it is possible to adjust the profile of the nip (N) formed with the counter-roll (50) of said variable-crown roll (10), and which said loading elements (14) or equivalent are fitted substantially at the nip plane (K-K) of said nip (N), and which said roll mantle (12) is journalled as revolving substantially within or near the areas of both of its ends on the central axle (11) by means of bearings (17), which are fitted on annular parts (18) supported on the central axle (11) as slidingly displaceable in the direction of the nip plane (K-K), hydraulic power units (21a,31a;21b,31b) being fitted between said annular parts (18) and the central axle (11), by means of which said power units the roll mantle (12) of the variable-crown roll (10) can be displaced relative the central axle (11) so as to open/close the nip (N), said hydraulic power units comprising at least two hydraulic-cylinder-piston devices (21a,31a;21b,31b), the directions of effect of the forces produced by means of said devices being arranged so that the resultant of said forces is parallel to the nip plane (K-K), **characterized** in that the hydraulic-cylinder-piston devices (21a,31a;21b,31b) are arranged in pairs so that the direction of forces produced by each hydraulic-cylinder-piston device (21a,31a;21b,31b) diverges from the direction of the nip plane (K-K), and that the hydraulic pistons (31a;31b) of said hydraulic-cylinder-piston devices (21a,31a;21b,31b) being slidingly supported on the corresponding plane faces (24a;24b) formed onto the central axle (11), such that the hydraulic-cylinder devices at least partially produce the forces that load the nip (N).

2. Variable-crown roll as claimed in claim 1, **characterized** in that the lines of effect of the hydraulic-cylinder-piston devices (21a,31a;21b,31b) in each pair form equally large angles (α) of opposite sense relative the nip plane (K-K).

3. Variable-crown roll as claimed in claim 1 or 2, **characterized** in that the hydraulic-cylinder-piston devices comprise cylinder bores (21a;21b) formed into the annular part (18), in which said cylinder bores hydraulic pistons (31a;31b) are fitted displaceably, said pistons being supported on the central axle (11).

4. Variable-crown roll as claimed in any of the preceding claims, **characterized** in that said plane faces (24a;24b) formed onto the central axle (11) are perpendicular to the direction of effect of the hydraulic pistons (31a;31b).

5. Variable-crown roll as claimed in any of the preceding claims, **characterized** in that the hydraulic pistons (31a;31b) are hydraulically relieved and sealed by means of an annular seal (33a;33b) against the plane faces (24a;24b) formed onto the central axle (11).

6. Variable-crown roll as claimed in claim 5, **characterized** in that, into the hydraulic pistons (31a;31b) ducts (32a;32b) have been formed which pass through the piston in the axial direction of the pistons and which said ducts extend from the pressure space defined by the annular seal (33a;33b) to the pressure space defined by the piston (31a;31b) and the bottom of the cylinder bore (21a;21b).

7. Variable-crown roll as claimed in any of the preceding claims, **characterized** in that the pressurized hydraulic fluid is arranged to be fed into the hydraulic-cylinder-piston devices (21a,31a;21b,31b) through fluid ducts (34a,35a;34b,35b) formed into the central axle (11) of the roll, which said ducts open onto the plane faces (24a;24b) into the pressure spaces defined by the seals (33a;33b).

8. Variable-crown roll as claimed in any of the preceding claims, **characterized** in that at each end of the roll two sets of hydraulic power units (21a,31a; 21b,31b) are provided, which are fitted to act in opposite directions in the nip plane (K-K).

## Patentansprüche

1. Durchbiegungausgleichswalze, die folgende Komponenten aufweist:
- eine massive zentrale Achse (11) und
- einen Walzenmantel (12), der auf der Achse drehbar angeordnet ist,
- hydraulische Kraftbeaufschlagungselemente (14) oder eine entsprechende Druckkammer oder eine Reihe dieser Kammern, die in dem Raum zwischen der zentralen Achse (11) und dem Walzenmantel (12) angeordnet ist/sind, durch welche Elemente (14) oder Kammer es möglich ist, das Profil des Spaltes (N) einzustellen, der durch das Zusammenwirken mit der Gegenrolle (50) der Durchbiegungausgleichswalze (10) gebildet wird, und welche Beaufschlagungselemente (14) oder dergleichen im wesentlichen in der Spaltebene (K-K) des Spaltes (N) angeordnet sind, wobei der Walzenmantel (12) hauptsächlich in oder nahe den Bereichen beider Enden der zentralen Achse (11) durch Lager (17) drehbar gelagert ist, welche auf ringförmigen Teilen (18) angeordnet sind, die auf der zentralen Achse (11) in Richtung der Spaltebene (K-K) gleitend verschiebbar angeordnet sind,
- hydraulische Betätigungseinheiten (21a,31a; 21b,31b), die zwischen den ringförmigen Teilen (18) und der zentralen Achse (11) angeordnet sind, durch welche Betätigungseinheiten der Walzenmantel (12) der Durchbiegungausgleichswalze (10) relativ zur zentralen Achse (11) auslenkbar ist, um so den Spalt (N) zu öffnen/schließen, wobei die hydraulischen Betätigungseinheiten mindestens zwei hydraulische Zylinder-Kolben-Einrichtungen (21a,31a; 21b,31b) enthalten, wobei die Wirkungsrichtungen der durch diese Einrichtungen erzeugten Kräfte derart ausgerichtet sind, daß die resultierende Kraft parallel zur Spaltebene (K-K) wirkt,
dadurch **gekennzeichnet**,
daß die hydraulischen Zylinder-Kolben-Einrichtungen (21a,31a; 21b,31b) paarweise derart angeordnet sind, daß die Richtung der durch jede hydraulische Zylinder-Kolben-Einrichtung (21a,31a; 21b,31b) produzierten Kräfte von der Richtung der Spaltebene (K-K) divergiert und daß die hydraulischen Kolben (31a; 31b) der hydraulischen Zylinder-Kolben-Einrichtungen (21a,31a; 21b,31b) gleitbar auf entsprechenden planen Flächen (24a,24b) abgestützt sind, die auf der zentralen Achse (11) gebildet sind, so daß die hydraulischen Zylindereinrichtungen zumindest teilweise die Kräfte produzieren, die den Spalt (N) beaufschlagen.

2. Durchbiegungausgleichswalze nach Anspruch 1,
dadurch **gekennzeichnet**,
daß die Wirkungsrichtungen der hydraulischen Zylinder-Kolben-Einrichtungen (21a,31a; 21b,31b) bei jedem Paar gleich große gegengerichtete Winkel (α) bezüglich der Spaltebene (K-K) bilden.

3. Durchbiegungausgleichswalze nach Anspruch 1 oder 2,
dadurch **gekennzeichnet**,
daß die hydraulischen Zylinder-Kolben-Einrichtungen Zylinderbohrungen (21a;21b) umfassen, die in dem ringförmigen Teil (18) ausgebildet sind, in welchen Zylinderbohrungen die hydraulischen Kolben (31a;31b) bewegbar angeordnet sind, wobei die Kolben auf der zentralen Achse (11) abgestützt sind.

4. Durchbiegungausgleichswalze nach einem der vorhergehenden Ansprüche,
dadurch **gekennzeichnet**,
daß die auf der zentralen Achse (11) gebildeten planen Flächen (24a,24b) senkrecht zur Wirkungsrichtung der hydraulischen Kolben (31,31b) verlaufen.

5. Durchbiegungausgleichswalze nach einem der vorhergehenden Ansprüche,
dadurch **gekennzeichnet**,
daß die hydraulischen Kolben (31a;31b) durch eine ringförmige Dichtung (33a;33b) gegen die auf der zentralen Achse (11) gebildeten planen Flächen (24a;24b) hydraulisch entlastet und abgedichtet sind.

6. Durchbiegungausgleichswalze nach Anspruch 5,
dadurch **gekennzeichnet**,
daß in den hydraulischen Kolben (31a;31b) Leitungen (32a;32b) ausgebildet sind, welche den Kolben in axialer Richtung durchsetzen und welche sich von dem durch die ringförmige Dichtung (33a;33b) definierten Druckraum zu dem durch den Kolben (31a;31b) und den Boden der Zylinderbohrung (21a;21b) definierten Druckraum erstrecken.

7. Durchbiegungausgleichswalze nach einem der vorhergehenden Ansprüche,
dadurch **gekennzeichnet**,
daß das unter Druck stehende hydraulische Fluid den hydraulischen Zylinder-Kolben-Einrichtungen (21a,31a; 21b,31b) durch Fluidleitungen (34a,35a; 34b,35b) zuführbar ist, die in der zentralen Achse (11) der Walze ausgebildet sind, wobei die Leitungen auf den planen Flächen (24a;24b) in die durch die Dichtungen (33a;33b) definierten Druckräume geöffnet sind.

8. Durchbiegungausgleichswalze nach einem der vorhergehenden Ansprüche,
dadurch **gekennzeichnet**,
daß an jedem Ende der Walze zwei Sets hydraulischer Betätigungseinheiten (21a,31a; 21b;31b) vorgesehen sind, deren Wirkungsrichtung in entgegengesetzten Richtungen in der Spaltebene (K-K) verläuft.

## Revendications

1. Rouleau à flexion variable, qui comprend un arbre central massif (11) et une enveloppe de rouleau (12) montée de façon à tourner sur ledit arbre, des éléments d'application de charge hydrauliques (14), une chambre de pression correspondante ou une série de ces dernières étant disposés dans l'espace compris entre ledit arbre central (11) et l'enveloppe (12) du rouleau, le profil de la zone de pincement (N) formée avec le contre-rouleau (50) dudit rouleau à flexion variable (10) pouvant être ajusté au moyen desdits éléments (14) ou chambres, lesdits éléments d'application de charge (14) ou équivalents étant disposés sensiblement dans le plan (K-K) de ladite zone de pincement (N), et ladite enveloppe (12) du rouleau est montée de façon à tourner sur l'arbre central (11) sensiblement dans ou à proximité des régions de ses deux extrémités au moyen de paliers (17), lesquels sont montés sur des éléments annulaires (18) supportés sur l'arbre central (11) de façon à pouvoir être déplacés de façon coulissante dans la direction du plan (K-K) de la zone de pincement, des unités d'application de force hydrauliques (21a, 31a; 21b, 31b) étant montées entre lesdits éléments annulaires (18) et l'arbre central (11) et l'enveloppe (12) du rouleau à flexion variable (10) pouvant être déplacée au moyen desdites unités d'application de force par rapport à l'arbre central (11) de façon à ouvrir/fermer la zone de pincement (N), lesdites unités d'application de force hydrauliques comprenant au moins deux dispositifs hydrauliques à cylindre et piston (21a, 31a; 21b, 31b), dont les directions d'action des forces produites par lesdits dispositifs sont orientées de manière que la résultante desdites forces soit parallèle au plan (K-K) de la zone de pincement,
caractérisé en ce que les dispositifs hydrauliques à cylindre et piston (21a, 31a; 21b, 31b) sont disposés par paires de manière que la direction des forces produites par chaque dispositif hydraulique à cylindre et piston (21a, 31a; 21b, 31b) diverge par rapport à la direction du plan (K-K) de le zone de pincement, et en ce que les pistons hydrauliques (31a; 31b) desdits dispositifs hydrauliques à cylindre et piston (21a, 31a; 21b, 31b) sont supportés de façon coulissante sur les faces planes correspondantes (24a; 24b) formées sur l'arbre central (11), de manière que les dispositifs à vérins hydrauliques produisent au moins partiellement les forces qui chargent la zone de pincement (N).

2. Rouleau à flexion variable selon la revendication 1, caractérisé en ce que les lignes d'action des dispositifs hydrauliques à cylindre et piston (21a, 31a; 21b, 31b) de chaque paire forment des angles (α) d'importance égale et de sens opposé par rapport au plan (K-K) de la zone de pincement.

3. Rouleau à flexion variable selon la revendication 1 ou 2, caractérisé en ce que les dispositifs hydrauliques à cylindre et piston comprennent des alésages cylindriques (21a; 21b) formés dans l'élément annulaire (18), dans lesquels lesdits pistons hydrauliques (31a, 31b) sont montés de façon mobile, lesdits pistons étant supportés sur l'arbre central (11).

4. Rouleau à flexion variable selon l'une quelconque des revendications précédentes, caractérisé en ce que lesdites faces planes (24a; 24b) formées sur l'arbre central (11) sont perpendiculaires à la direction d'action des pistons hydrauliques (31a; 31b).

5. Rouleau à flexion variable selon l'une quelconque des revendications précédentes, caractérisé en ce que les pistons hydrauliques (31a; 31b) sont équilibrés hydrauliquement et appliqués de façon étanche eu moyen d'un joint annulaire (33a; 33b) contre les faces planes (24a; 24b) formées sur l'arbre central (11).

6. Rouleau à flexion variable selon la revendication 5, caractérisé en ce que des conduites (32a; 32b) sont formées dans les pistons hydrauliques (31a; 31b), qui traversent les pistons dans la direction axiale de ces pistons, lesdites conduites s'étendant de l'espace à pression défini par les joints annulaires (33a; 33b) jusqu'à l'espace à pression défini par les pistons (31a; 31b) et le fond des alésages cylindriques (21a; 21b).

7. Rouleau à flexion variable selon l'une quelconque des revendications précédentes, caractérisé en ce que le fluide hydraulique sous pression est envoyé dans les dispositifs hydrauliques à cylindre et piston (21a, 31a; 21b, 31b) par des conduites à fluide (34a, 35a; 34b, 35b) formées dans l'arbre central (11) du rouleau, lesquelles conduites débouchent sur les faces planes (24a; 24b) dans les espaces à pression définis par les joints (33a; 33b).

8. Rouleau à flexion variable selon l'une quelconque des revendications précédentes, caractérisé en ce qu'à chaque extrémité du rouleau sont prévus deux jeux d'unités hydrauliques d'application de force (21a 31a; 21b, 31b), qui sont montées de façon à agir dans des directions opposées dans le plan (K-K) de la zone de pincement.
